Europäisches Patentamt

(19) European Patent Office

Office européen des brevets

(11) Veröffentlichungsnummer: **0 119 526**
**B1**

## (12) EUROPÄISCHE PATENTSCHRIFT

(45) Veröffentlichungstag der Patentschrift:
23.07.86

(21) Anmeldenummer: **84102256.9**

(22) Anmeldetag: **02.03.84**

(51) Int. Cl.⁴: **B 62 D 21/18,** B 60 P 3/28

(54) Fahrgestell für Fahrzeugkrane.

(30) Priorität: **17.03.83 DE 3309582**

(43) Veröffentlichungstag der Anmeldung:
**26.09.84 Patentblatt 84/39**

(45) Bekanntmachung des Hinweises auf die Patenterteilung:
**23.07.86 Patentblatt 86/30**

(84) Benannte Vertragsstaaten:
**AT BE CH DE FR GB IT LI NL SE**

(56) Entgegenhaltungen:
**AU-B-44 611**
**BE-A-443 134**
**DE-A-2 040 688**
**FR-A-1 494 349**
**GB-A-2 009 680**
**US-A-3 622 171**
**US-A-4 160 558**

**PATENTS ABSTRACTS OF JAPAN, Band 6, Nr.**
**228(M-171)(1106), 13. November 1982**

(73) Patentinhaber: **Harnischfeger GmbH, Sunderweg 86,**
**D-4600 Dortmund 1 (DE)**

(72) Erfinder: **Seemann, Joachim, Dipl.- Ing., Bierkamp**
**20, D-4600 Dortmund 50 (DE)**

(74) Vertreter: **Eberhard, Friedrich, Dr., Am**
**Thyssenhaus 1, D-4300 Essen (DE)**

EP 0 119 526 B1

LIBER, STOCKHOLM 1986

## Beschreibung

Die Erfindung bezieht sich auf ein Fahrgestell für Fahrzeugkrane, das im Bereich der Vorderachse bzw. Vorderachsen zwei im Abstand voneinander parallele Längsträger aufweist, die fest mit einem sich im Bereich der Hinterachse(n) in der Fährzeuglängsachse erstreckenden Torsionskörper verbunden sind, an dessen Oberseite eine konsolartig gegen den Torsionskörper abgestützte waagerechte Aufnahmeplatte für die Drehlagerung des Kranoberwagens angeordnet ist, und der im Bereich des Obergangs von den Längsträgern zum Torsionskörper sowie im Bereich des freien Endes des Torsionskörpers jeweils einen quer zur Längsmittel ebene des Fahrgestells angeordneten rechtekigen Kasten als Aufnahmebehälter und Lagerung für seitlich ausfahrbare Stützausleger quer zur Fahrgestell-Längsachse aufweist. Ein derartiges Fahrgestell ist aus der US-A-4 160 558 bekannt.

Bei einem solchen aus der DE-A- 20 40 688 bekannten Trägerfahrzeug für Kranaufbauten ist der Torsionskörper als rechteckiger Kastenträger mit zwei sich über die gesamte Fahrzeuglänge erstreckenden Stegblechen ausgebildet. Dieser Kastenträger, dessen senkrechte Stegbleche durch einen gemeinsamen Obergurt miteinander verbunden sind, ist nur im Bereich der Hinterachse(n) oberhalb der Untergurte der Stegbleche durch einen die beiden Stegbleche verbindenden Zwischengurt geschlossen, im übrigen aber nach unten hin offen. Da sowohl im Obergurt als auch im Zwischengurt Durchtrittsöffnungen für die Drehlagerung sowie für Energie-Versorgungsleitungen für Kranaufbauten vorhanden sein müssen, sind zu beiden Seiten dieser Durchtrittsöffnungen fest mit den Stegblechen verbundene senkrechte Schottbleche angeordnet, die bewirken, daß die auftretenden Torsionskräfte von der Drehlagerung in den Torsinskasten eingeleitet werden.

Aus den US-Patentschriften 3 622 171 und 4 160 558 sind ebenfalls Fahrgestelle für Fahrzeugkrane bekannt, die im Bereich der Vorderachsen zwei im Abstand voneinander parallele Längsträger aufweisen, die mit einem sich über die Hinterachsen erstreckenden Torsionskörper rechteckigen Querschnitts verschweißt sind. Darüber hinaus ist aus der US-A-4 160 558 bekannt, die an der Oberseite des Torsionskörpers angeordnete Aufnahmeplatte für die Drehlagerung des Kran-Oberwagens konsolartig gegen den Torsionskörper abzustützen.

Diese bekannten Fahrgestelle für Fahrzeugkrane haben den Nachteil, daß eine einmal bestimmte Größe des Torsionskö:pers mit wirtschaftlichem Aufwand nicht ohne weiteres für Fahrzeugkrane unterschiedlicher Größen bzw. Tragfähigkeiten verwendbar ist, sondern entsprechend den unterschiedlichen Krankapazitäten Torsionskörper unterschiedlicher Außenabmessungen erforderlich sind. Dies hat einen entsprechend großen Aufwand insbesondere hinsichtlich Lagerhaltung der Konstruktionselemente sowie in der Fertigung zur Folge.

Der Erfindung liegt die Aufgabe zugrunde, ausgehend von dem Gegenstand der letztgenannten US-A-, ein Fahrgestell für Fahrzeugkrane zu schaffen, das einerseits ohne weiteres in der Lage ist, die auftretenden Kräfte und Torsionsmomente aufzunehmen, und andererseits bei geringem Eigengewicht die Möglichkeit bietet, mit geringstem Aufwand für Fertigung, Lagerhaltung und Material für alle zu fertigenden Krankapazitäten einen Torsionskörper gleicher Außenabmessungen verwenden zu können.

Diese Aufgabe wird bei einem Fahrgestell der eingangs genannten Art dadurch gelöst, daß der Torsionskörper als geradliniges Torsionsrohr von kreisförmigem Querschnitt ausgebildet und mit den beiden vorderen Längsträgern durch den zwischengeordneten torsionssteifen Rechteckkasten verbunden ist, wobei das Torsionsrohr im Bereich der Hinterachse bzw. Hinterachsen an der Unterseite einen Ausschnitt für die Lagerung der letzteren aufweist, der mit einem parallel zur Aufnahmeplatte angeordneten Gurtblech verschlossen ist, das sowohl mit der Innenwand des Torsionsrohrs als auch mit dem Gurtblech und der Innenwand des Torsionsrohrs (4) verschweißte senkrechte Steifenbleche aufweist.

Die erfindungsgemäße Anordnung des genannten Rechteckkastens hat den Vorteil, daß ein für die Krafteinleitung einwandfreier Obergang von den vorderen Längsträgern zu dem Torsionsrohr und umgekehrt gewährleistet ist. Es versteht sich dabei von selbst, daß der genannte Rechteckkasten stumpf gegen die Enden der vorderen Längsträger und gegen das Torsionsrohr geschweißt ist und seine Oberkante bündig mit der Oberkante des Torsionsrohrs liegen muß.

Das erfindungsgemäße Fahrgestell für Fahrzeugkrane hat den Vorteil, daß es ohne großen Konstruktions- und Fertigungsaufwand entsprechend den unterschiedlichen Erfordernissen der verschiedenen Krankapazitäten variiert werden kann. Darüber hinaus verleiht das Torsionsrohr dem Fahrgestell eine größere Quer-Elastizität, die bei Unebenheiten des Bodens sehr vorteilhaft ist. Da der Außendurchmesser des Torsionsrohres nicht verändert zu werden braucht und somit für alle Krankapazitäten gleich ist, weil es allein durch unterschiedliche, nur die Rohrinnendurchmesser variierende Wanddicken den auftretenden Beanspruchungen angepaßt werden kann, ist es möglich, die außen an dem Torsionskörper zu befestigenden Konstruktionsteile weitestgehend gleich auszubilden. Lediglich der untere Ausschnitt des Torsionsrohres mit dem angeschweißten Gurtblech und dessen Aussteifungen müssen - mit ausreichendem Raum für die üblichen Feder- und Lenkungssysteme - den unterschiedlichen Achsen bzw. der unterschiedlichen Achsenzahl angepaßt werden.

Als zweckmäßig und wirtschaftlich sehr günstig hat sich eine Ausführung der Erfindung gezeigt, bei der die konsolartige Abstützung der die Drehlagerung tragenden Aufnahmeplatte als von dem Torsionsrohr durchdrungener, mit seinem größten Durchmesser an der Aufnahmeplatte anliegender Hohlkörper mit kegelstumpfförmiger Mantelfläche ausgebildet ist, die beiderseits des Torsionsrohres tangential gegen dessen unteren Bereich ausläuft. Dies hat den Vorteil, daß die Aufnahmeplatte gleichmäßig kreisförmig unterstützt und eine statisch einwandfreie Krafteinleitung in den Torsionskörper gewährleistet ist.

In weiterer Ausgestaltung der Erfindung ist vorgesehen, daß der die vorderen Längsträger und das Torsionsrohr verbindende torsionssteife Rechteckkasten als Aufnahmebehälter und Lagerung für in üblicher Weise ausgebildete seitlich ausfahrbare Stützausleger ausgebildet ist. Dies hat den Vorteil, daß besondere Aufnahmebehälter und Führungen für die Stützausleger nicht erforderlich sind und auch hierdurch das Eigengewicht gegenüber bisherigen Fahrgestellausführungen niedriger gehalten werden kann, ohne daß die Tragfähigkeit oder Standfestigkeit des Fahrzeugkrans vermindert werden.

Eine weitere vorteilhafte Platzausnutzung läßt sich durch Anordnung des Kraftstoffbehälters und/oder der Energieleitungen in dem Torsionsrohr erreichen.

Um die Standsicherheit des Fahrzeugkrans bei Kranarbeiten zu erhöhen, ist es zweckmäßig, am freien Ende des Torsionsrohrs in an sich bekannter Weise einen weiteren Hohlkasten mit in diesem angeordneten ein- und ausfahrbaren Stützauslegern anzuordnen.

In der Zeichnung ist ein Ausführungsbeispiel der Erfindung schematisch dargestellt. Es zeigen

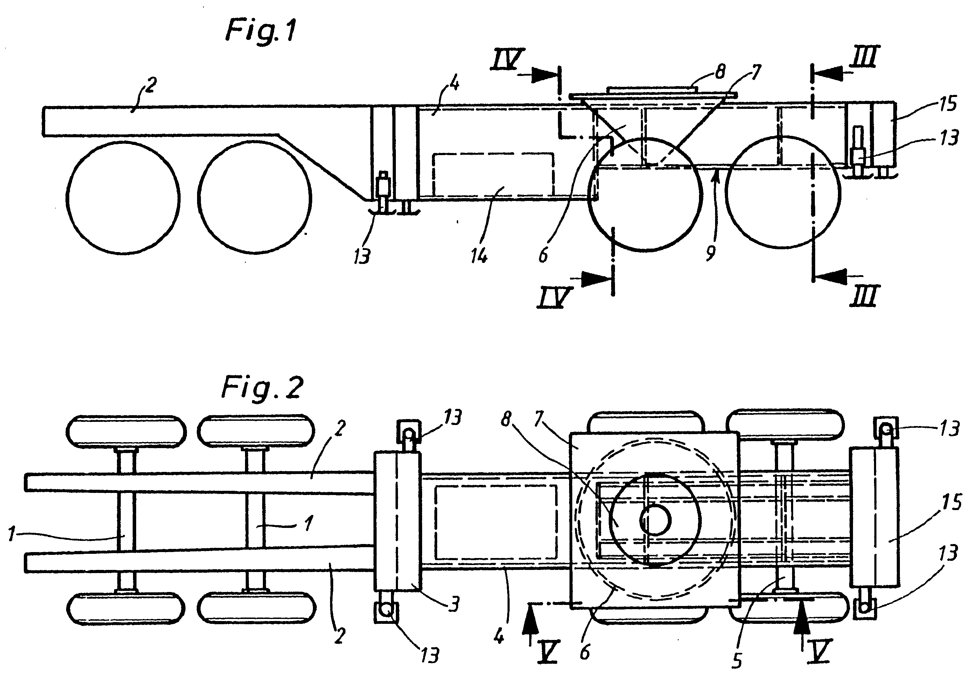

Fig. 1 das Fahrgestell in Seitenansicht,
Fig. 2 das Fahrgestell von oben,

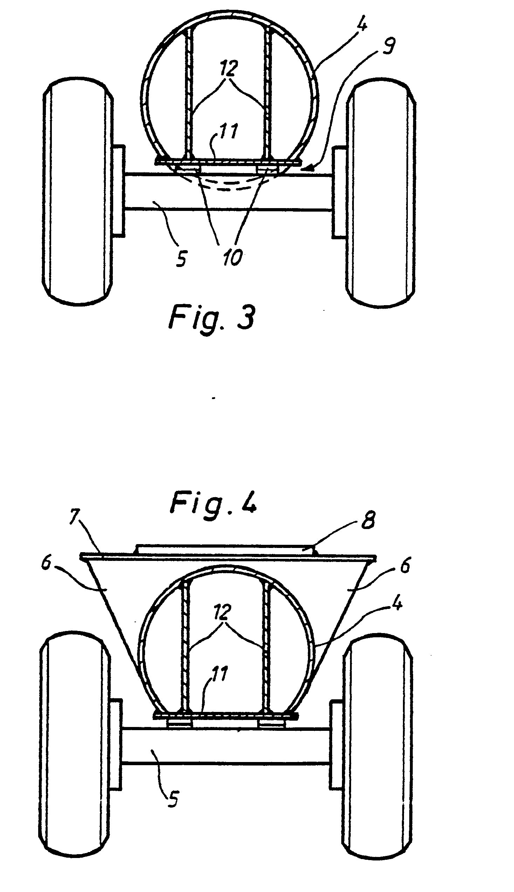

Fig. 3 den Schnitt III-III aus Fig. 1,
Fig. 4 den Schnitt IV-IV aus Fig. 1,

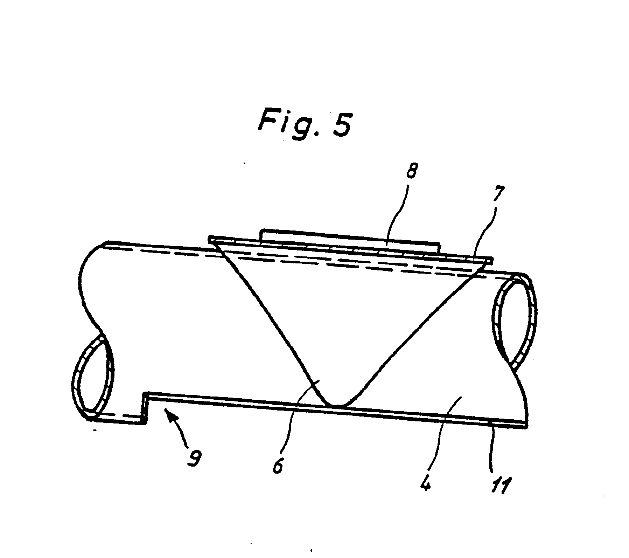

Fig. 5 den Schnitt V-V aus Fig. 2.

Das erfindungsgemäße Fahrgestell für einen Fahrzeugkran weist im Bereich der beiden Vorderachsen 1 zwei im Abstand voneinander parallele Längsträger 2 auf. Diese sind über einen zwischengeordneten torsionssteifen Rechteckkasten 3 fest mit einem Torsionsrohr 4 kreisförmigen Querschnitts verbunden, das in der Fahrzeuglängsachse angeordnet ist und sich von dem Rechteckkasten 3 aus geradlinig in den Bereich der Hinterachsen 5 erstreckt. An der Oberseite des Torsionsrohrs 4 ist eine konsolartig abgestützte waagerechte Aufnahmeplatte 7 für die Drehlagerung 8 eines nicht dargestellten Kranoberwagens befestigt. Die konsolartige Abstützung der Aufnahmeplatte 7 ist als kegelstumpfartiger, von dem Torsionsrohr 4 durchdrungener Hohlkörper 6 ausgebildet, dessen Mantelfläche beiderseits des Torsionsrohrs 4 jeweils tangential gegen den unteren Bereich des Torsionsrohrs 4 ausläuft und der mit seinem größten Durchmesser an der Aufnahmeplatte 7 angeschweißt ist. Im Bereich der Hinterachsen 5 weist das Torsionsrohr 4 an der Unterseite einen Ausschnitt für die Lagerung 10 der Hinterachsen 5 auf, der mit einem parallel zur Aufnahmeplatte 7 der Drehlagerung 8 angeordneten Gurtblech 11 verschlossen ist. Das Gurtblech 11 ist mit senkrecht auf ihm angeschweißten Steifenbleche 12 versehen, die außerdem mit der Innenwand des Torsionsrohrs 4 verschweißt sind. Am freien Ende des Torsionsrohrs 4 ist ein Hohlkasten 15 angeschweißt, in dem beiderseits ein- und ausfahrbare, an sich bekannte Stützausleger 13 gelagert sind.

In dem Rechteckkasten 3 sind in üblicher Weise seitlich ausfahrbare Stützausleger 13 gelagert. Der Kraftstoffbehälter 14 sowie die erforderlichen, jedoch nicht dargestellten Energieleitungen sind in dem Torsionsrohr 4 platzsparend angeordnet.

## Patentansprüche

1. Fahrgestell für Fahrzeugkrane, das im Bereich der Vorderachse(n) (1) zwei im Abstand voneinander parallele Längsträger (2) aufweist, die fest mit einem sich im Bereich der Hinterachse(n) (5) in der Fahrzeuglängsachse erstreckenden Torsionskörper (4) verbunden sind, an dessen Oberseite eine konsolartig gegen den Torsionskörper abgestützte waagerechte Aufnahmeplatte (7) für die Drehlagerung (8) des Kranoberwagens angeordnet ist, und der im Bereich des Übergangs von den Längsträgern zum Torsionskörper sowie im Bereich des freien Endes des Torsionskörpers jeweils einen quer zur Längsmittelebene des Fahrgestells angeordneten rechteckigen Kasten (3, 15) als Aufnahmebehälter und Lagerung für seitlich ausfahrbare Stützausleger (13) quer zur Fahrgestell-Längsachse aufweist, dadurch gekennzeichnet, daß der Torsionskörper als geradliniges Torsionsrohr (4) von kreisförmigem Querschnitt ausgebildet und mit den beiden vorderen Längstragern (2) durch den zwischengeordneten torsionssteifen Rechteckkasten (3) verbunden ist, und daß das Torsionsrohr (4) im Bereich der Hinterachse(n) (5) an der Unterseite einen Ausschnitt (9) für die Lagerung (10) der Hinterachse(n) (5) aufweist, der mit einem parallel zur Aufnahmeplatte (7) angeordneten Gurtblech (11) verschlossen ist, das sowohl mit der Innenwand des Torsionsrohrs (4 als auch mit dem Gurtblech (11) und der Innenwand des Torsionsrohrs (4) verschweißte senkrechte Steiftenbleche (12) aufweist.

2. Fahrgestell nach Anspruch 1, dadurch gekennzeichnet, daß die konsolartige Abstützung der Aufnahmeplatte (7) als von dem Torsionsrohr (4) durchdrungener, mit seinem größten Durchmesser an der Aufnahmeplatte (7) anliegender Hohlkörper (6) mit kegelstumpfförmiger Mantelfläche ausgebildet ist, die beiderseits des Torsionsrohres (4) tangential gegen dessen unteren Bereich ausläuft.

3. Fahrgestell nach Anspruch 1 oder 2, <u>dadurch gekennzeichnet</u>, daß der Rechteckkasten (3) als Aufnahmebehälter und Lagerung für seitlich ausfahrbare Stützausleger (13) ausgebildet ist.

4. Fahrgestell nach einem der Ansprüche 1 bis 3, <u>dadurch gekennzeichnet</u>, daß der Kraftstoffbehälter (14) und/oder die Energieleitungen in dem Torsionsrohr (4) angeordnet sind.

## Claims

1. Chassis for vehicle cranes, which in the region of the front axle/s (1) comprises two longitudinal bearers (2) which are spaced apart and parallel to one another, and which are connected securely to a torsion body (4) which extends on the longitudinal axis of the vehicle in the region of the rear axle/s (5) and on the topside of which there is arranged a horizontal mounting plate (7), supported in bracket-like manner on the torsion body, for the rotary bearing arrangement (8) of the crane upper truck, and which comprises in the region of the transition from the longitudinal bearers to the torsion body and also in the region of the free end of the torsion body in each case a rectangular box (3, 15) arranged transversely to the longitudinal central plane of the chassis and serving as an accommodation container and bearing arrangement for laterally extensible supporting booms (13) transversely to the chassis longitudinal axis, characterised in that the torsion body is constructed as a rectilinear torsion tube (4) of circular cross-section and is connected to the two forward longitudinal bearers (2) by the interposed torsionally rigid rectangular box (3), and that the torsion tube (4) comprises in the region of the rear axle/s (5) at the underside a cutaway (9) for the bearing arrangement (10) of the rear axle/s (5), which cutaway is closed with a chord plate (11), the latter being arranged parallel to the mounting plate (7) and having vertical stiffening plates (12) welded both to the inner wall of the torsion tube (4) and also to the chord plate (11) and to the inner wall of the torsion tube (4).

2. Chassis according to claim 1, characterised in that the bracket-like bearing arrangement for the mounting plate (7) is constructed as a hollow body (6) with a frustoconical generated surface, which body has the torsion tube (4) extending through it and abuts with its greatest diameter against the mounting plate (7), the generated surface terminating at both sides of the torsion tube (4) tangentially relatively to the lower region of said tube.

3. Chassis according to claim 1 or 2, characterised in that the rectangular box (3) is constructed as an accommodating container and bearing means for laterally extensible supporting booms (13).

4. Chassis according to one of claims 1 to 3, characterised in that the fuel tank (14) and/or the energy conduits are arranged in the torsion tube (4).

## Revendications

1. Châssis pour grues sur véhicule qui presente dans la zone de l'essieu, ou des essieux, avant (1) deux longerons parallèles (2) qui sont unis rigidement à un corps de torsion (4) qui s'étend dans la zone de l'essieu, ou des essieux, arrière (5) dans l'axe longitudinal du vehicule, sur le dessus duquel est placée une plaque support horizontale (7), supportée en console par ledit corps, pour le support de rotation (8) de la partie tournante de la grue, et qui présente, dans la zone de jonction des longerons au dit corps et dans la zone de son extrémité libre, un caisson rectangulaire (3,15) disposé perpendiculairement au plan médian longitudinal du châssis et servant de réceptacle et de support pour des béquilles stabilisatrices (13) pouvant sortir latéralement, caractérisé par le fait que le corps de torsion est un tube de torsion droit (4) de section circulaire et est réuni aux deux longerons avant (2) par le caisson rectangulaire rigide en torsion (3), intercalé, et que, dans la zone de l'essieu, ou des essieux, arrière (5), le tube de torsion (4) présente sur le dessous un évidement (9) pour le support (10) de l'essieu, ou des essieux, arrière (5) qui est obturé par une semelle (11) disposée parallèlement à la plaque support (7) et présentant des plaques raidisseuses verticales (12) soudées à la paroi intérieure du tube de torsion (4) et à la semelle (11).

2. Châssis selon la revendication 1, caractérisé par le fait que le support en console de la plaque support (7) est un corps creux (6) à surface latérale tronconique qui est traversé par le tube de torsion (4), s'appuie à son plus grand diamètre sur la plaque support (7) et se termine des deux côtés du tube de torsion (4) tangentiellement contre la partie inférieure de celui-ci.

3. Châssis selon l'une des revendications 1 et 2, caractérisé par le fait que le caisson rectangulaire (3) forme un receptacle et un support pour des bequilles stabilisatrices (13) pouvant sortir lateralement.

4. Châssis selon l'une des revendications 1 à 3, caractérisé par le fait que le réservoir de carburant (14) et/ou les canalisations d'énergie sont placés dans le tube de torsion (4).

*Fig.1*

*Fig.2*

Fig. 3

Fig. 4

## Fig. 5